# EUROPÄISCHE PATENTSCHRIFT

(11) **EP 1 888 948 B1**
(45) Veröffentlichungstag und Bekanntmachung des Hinweises auf die Patenterteilung: **14.10.2009**
(21) Anmeldenummer: 06754181.3
(22) Anmeldetag: 07.06.2006
(51) Int. Cl.: F16H 61/30, F16H 63/30, F15B 11/12

(54) **BETÄTIGUNGSZYLINDER FÜR FAHRZEUGGETRIEBE**
ACTUATING CYLINDER FOR VEHICLE GEARBOXES
CYLINDRE DE COMMANDE DESTINE A DES BOITES DE VITESSES DE VEHICULES

(30) Priorität: 09.06.2005 DE 102005026475
(43) Veröffentlichungstag der Anmeldung: 20.02.2008
(73) Patentinhaber: ZF Friedrichshafen AG, 88038 Friedrichshafen (DE)
(72) Erfinder: BADER, Josef, 88045 Friedrichshafen (DE); RENNER, Stefan, 78351 Bodman-Ludwigshafen (DE)
(86) Internationale Anmeldenummer: PCT/EP2006/005416
(87) Internationale Veröffentlichungsnummer: WO 2006/131331

(56) Entgegenhaltungen:
- EP-A- 1 247 031
- DE-A1- 3 110 855
- DE-A1- 10 347 493

## Beschreibung

Die vorliegende Erfindung betrifft ein Fahrzeuggetriebe gemäß dem Oberbegriff des Patentanspruchs 1.

Heutzutage weisen Fahrzeuggetriebe mehrere Bauteile auf, die unterschiedlichen Funktionalitäten entsprechen, wodurch sich die Ausgestaltung der Getriebe als aufwändig und kostenintensiv gestaltet, insbesondere dann, wenn Aktuatoren zur Betätigung von Schaltelementen, wie es z.B. bei automatisierten Getrieben der Fall ist, in oder an das Getriebe integriert werden müssen.

Aus der DE 44 22 900 A1 der Anmelderin ist ein Fahrzeuggetriebe bekannt, welches eine am Getriebegehäuse befestigte Anschlussplatte aufweist, die in einem sich zu einer Kupplungseinrichtung hin erstreckenden Bereich des Gehäuses angeordnet ist, wobei Teile der Getriebebremse in der Anschlussplatte angeordnet sind.

Des weiteren ist aus der gattungsgemäßen DE 103 47 493 A1 der Anmelderin ein Fahrzeuggetriebe bekannt, bei dem ebenfalls eine Anschlussplatte vorgesehen ist, in der Aufnahmen für zumindest Teile der Betätigungselemente zur Betätigung der drehmomentübertragenden Bauteile vorgesehen sind. Hierbei ist der pneumatische Betätigungszylinder für eine Schalteinrichtung des Getriebes von einem ersten Zylinderteil, der in der Anschlussplatte vorgesehen ist, und von einem zweiten Zylinderteil, der im Getriebegehäuse vorgesehen ist, ge-bildet. Im Betätigungszylinder ist ein Kolben verschiebbar angeordnet, der mit einer Schaltstange des Getriebes in Wirkverbindung steht. Bei dieser Kon-struktion ist im Zylinder ein Anschlagring vorgesehen, der eine weitere Ver-schiebung des im Zylinder verschiebbar angeordneten Kolbens in Positionen, die keiner Zylinderstellung entsprechen, verhindert.

Bei dieser Konstruktion erweist es sich als nachteilig, dass die Ausgestaltung der Dichtlauffläche des Kolbens im Getriebegehäuse in gießtechnischen Schwierigkeiten resultiert.

Der vorliegenden Erfindung liegt die Aufgabe zugrunde, ein Fahrzeuggetriebe anzugeben, bei dem das Gehäuse einen Bereich umfasst, in dem eine mit,dem Gehäuse fest verbindbare Anschlussplatte vorgesehen ist, in der Aufnahmen für zumindest Teile der Betätigungselemente zur Betätigung der drehmomentübertragenden Bauteile und/oder Teile der Betätigungselemente zur Betätigung der Schalteinrichtung des Getriebes vorgesehen sind, bei dem die Anforderungen an die Oberflächengüte des Gehäuses und der Anschlussplatte im Vergleich zu der aus der DE 103 47 493 A1 bekannten Konstruktion gering sind.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird ein Fahrzeuggetriebe vorgeschlagen, bei dem das Gehäuse einen Bereich umfasst, in dem eine mit dem Gehäuse fest verbindbare Anschlussplatte vorgesehen ist, in der Aufnahmen für zumindest Teile der Betätigungselemente zur Betätigung der drehmomentübertragenden Bauteile und/oder Teile der Betätigungselemente zur Betätigung der Schalteinrichtung des Getriebes vorgesehen sind, wobei der zumindest eine erforderliche Betätigungszylinder von einem ersten Zylinderteil, der in der Anschlussplatte vorgesehen ist, und von einem zweiten Zylinderteil, der im Getriebegehäuse vorgesehen ist, gebildet ist, bei dem der im Zylinder vorgesehene Anschlagring derart ausgebildet ist, dass die Dichtlaufflächen des Kolbens im Getriebegehäuse und/oder in der Anschlussplatte von einer buchsenförmigen Erweiterung des Anschlagringes gebildet werden.

Durch die erfindungsgemäße Erweiterung des Anschlagringes um die Dichtlauffläche, ist es möglich, die Anforderungen an die Oberflächengüte des Gehäuses und der Anschlussplatte gering zu halten, wobei die Herstellung des Anschlagringes gießtechnisch unproblematisch ist. Des weiteren sind bei Produktionsfehlern die Ausschusskosten erheblich reduziert.

Die Erfindung wird im Folgenden anhand der beigefügten Figuren beispielhaft näher erläutert. Es zeigen:
- Fig. 1: eine schematische Schnittansicht einer ersten Ausführungs- form eines für die Erfindung relevanten Teiles des erfin- dungsgemäßen Getriebes und
- Fig. 2: eine schematische Schnittansicht einer weiteren Ausfüh- rungsform eines für die Erfindung relevanten Teiles des er- findungsgemäßen Getriebes.

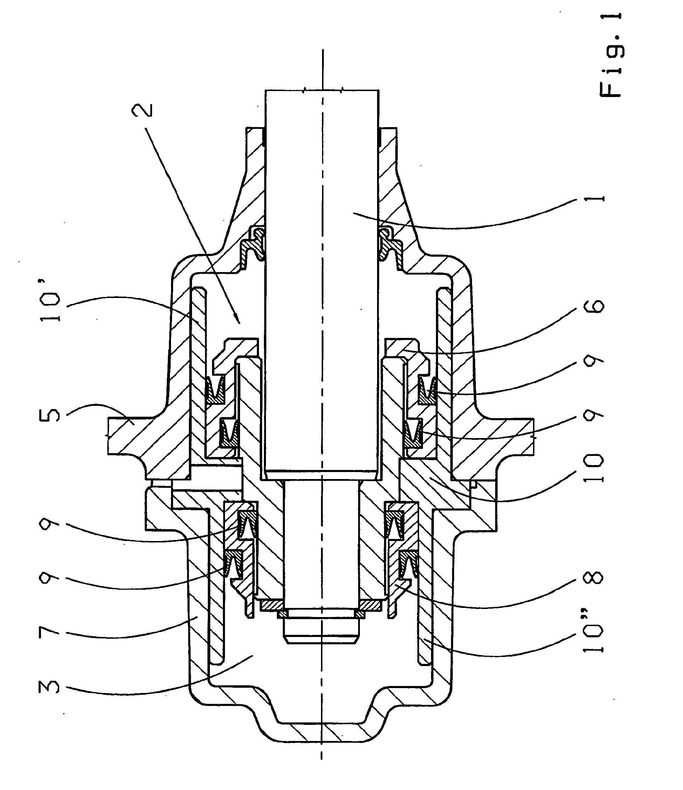

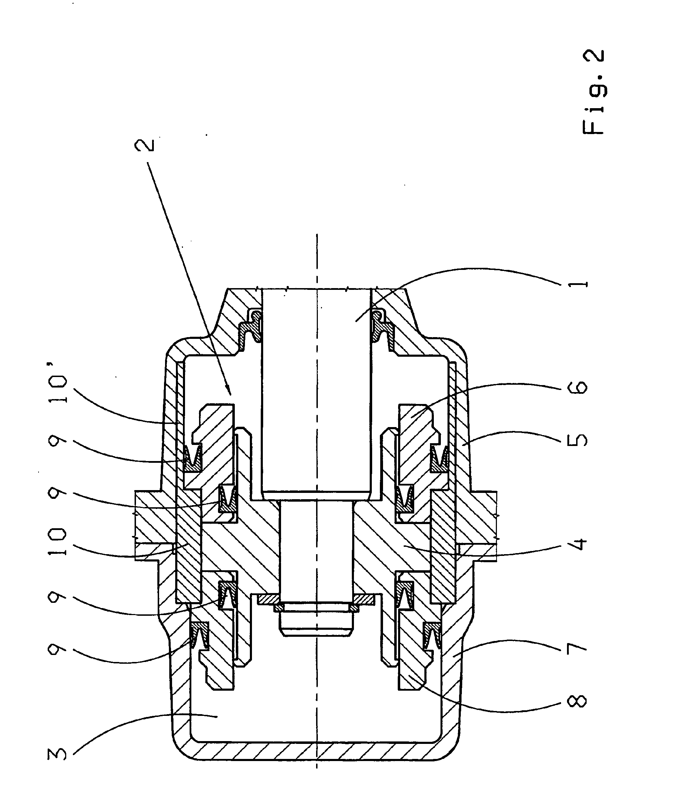

In den Fig. 1 und 2 ist mit 1 eine Schaltstange des Getriebes bezeichnet, die mit dem Kolben 2 verbunden ist; der Kolben 2 umfasst eine Innenbuchse 4 und einen ersten im Getriebegehäuse 5 verschiebbar angeordneten Teil 6 sowie einen zweiten in der Anschlussplatte 7 verschiebbar angeordneten Teil 8, wobei die Kolbenteile 6 und 8 die erforderlichen Dichtringe 9 umfassen.

Wie aus den Fig. 1 und 2 ersichtlich, ist der Kolben 2 in einem als Betätigungszylinder für die Schaltstange 1 ausgebildeten Zylinder 3 axial verschiebbar angeordnet, wobei ein Teil des Zylinders 3 durch das Getriebegehäuse 5 und ein Teil des Zylinders 3 durch die Anschlussplatte 7 gebildet ist und wobei im Zylinder ein Anschlagring 10 vorgesehen ist. Vorzugsweise ist der Zylinder als Drei-Stellungszylinder ausgebildet und kann ein pneumatischer oder hydraulischer Zylinder sein. Wenn beide Kolbenteile 6, 8 am Anschlagring anliegen, entspricht dies der Neutralstellung.

Gemäß der Erfindung ist der Anschlagring 10 derart ausgebildet, dass die Dichtlaufflächen des Kolbens 2 im Getriebegehäuse und/oder in der Anschlussplatte von einer buchsenförmigen Erweiterung 10' bzw. 10" des Anschlagringes 10 gebildet werden.

In Fig. 1 ist die Ausführungsform dargestellt, bei der die Dichtlaufflächen des Kolbens 2 sowohl im Getriebegehäuse 5 als auch in der Anschlussplatte 7 von einer buchsenförmigen Erweiterung 10' bzw. 10" des Anschlagringes 10 gebildet werden.

Gegenstand der Fig. 2 ist die Ausführungsform, bei der die Dichtlauffläche des Kolbens 2 im Getriebegehäuse 5 durch eine Erweiterung 10' des Anschlagringes 10 gebildet wird.

Selbstverständlich fällt auch jede konstruktive Ausbildung, insbesondere jede räumliche Anordnung der Bauteile des erfindungsgemäßen Getriebes, insbesondere des Zylinders und des im Zylinder verschiebbar angeordneten Kolbens an sich sowie zueinander und soweit technisch sinnvoll, unter den Schutzumfang der vorliegenden Ansprüche, ohne die Funktion des Getriebes, wie sie in den Ansprüchen angegeben ist, zu beeinflussen, auch wenn diese Ausbildungen nicht explizit in den Figuren oder in der Beschreibung dargestellt sind.

### Bezugszeichen

- 1: Schaltstange
- 2: Kolben
- 3: Zylinder
- 4: Innenbuchse
- 5: Getriebegehäuse
- 6: Kolbenteil
- 7: Anschlussplatte
- 8: Kolbenteil
- 9: Dichtring
- 10: Anschlagring
- 10': buchsenförmige Erweiterung des Anschlagringes
- 10": buchsenförmige Erweiterung des Anschlagringes

## Patentansprüche

1. Fahrzeuggetriebe, dessen Gehäuse einen Bereich umfasst, in dem eine mit dem Gehäuse fest verbindbare Anschlussplatte vorgesehen ist, in der Aufnahmen für zumindest Teile der Betätigungselemente zur Betätigung der drehmomentübertragenden Bauteile und/oder Teile der Betätigungselemente zur Betätigung der Schalteinrichtung des Getriebes vorgesehen sind, wobei der zumindest eine erforderliche Betätigungszylinder von einem ersten Zylinderteil, der in der Anschlussplatte vorgesehen ist, und von einem zweiten Zylinderteil, der im Getriebegehäuse vorgesehen ist, gebildet ist, **dadurch gekennzeichnet, dass** der im Zylinder (3) vorgesehene Anschlagring (10) derart ausgebildet ist, dass die Dichtlaufflächen des Kolbens (2) im Getriebegehäuse (5) und/oder in der Anschlussplatte (7) von einer buchsenförmigen Erweiterung (10', 10") des Anschlagringes (10) gebildet werden.

2. Fahrzeuggetriebe nach Anspruch 1, **dadurch gekennzeichnet, dass** der Zylinder (3) als Drei-Stellungszylinder ausgebildet ist.

3. Fahrzeuggetriebe nach Anspruch 1 oder 2, **dadurch gekennzeichnet, dass** der Zylinder (3) ein pneumatischer oder hydraulischer Zylinder ist.

## Claims

1. Vehicle gearbox, the housing of which comprises a region in which is provided a connecting plate which can be fixedly connected to the housing and in which receptacles are provided for at least parts of the actuating elements for actuating the torque-transmitting components and/or parts of the actuating elements for actuating the shift device of the gearbox, with the at least one actuating cylinder which is required being formed from a first cylinder part which is provided in the connecting plate and from a second cylinder part which is provided in the gearbox housing, **characterized in that** the stop ring (10) which is provided in the cylinder (3) is designed such that the sealing running surfaces of the piston (2) in the gearbox housing (5) and/or in the connecting plate (7) are formed by a sleeve-shaped extension (10', 10'') of the stop ring (10).

2. Vehicle gearbox according to Claim 1, **characterized in that** the cylinder (3) is designed as a three-position cylinder.

3. Vehicle gearbox according to Claim 1 or 2, **characterized in that** the cylinder (3) is a pneumatic or hydraulic cylinder.

## Revendications

1. Transmission de véhicule dont le boîtier présente une région dans laquelle est prévue une plaque de raccordement pouvant être connectée fixement au boîtier, dans laquelle sont prévus des évidements pour au moins certaines parties des éléments d'actionnement pour l'actionnement des composants de transfert de couple et/ou certaines parties des éléments d'actionnement pour l'actionnement du dispositif de changement de vitesse de la transmission, l'au moins un cylindre d'actionnement nécessaire étant formé par une première partie de cylindre qui est prévue dans la plaque de raccordement et par une deuxième partie de cylindre qui est prévue dans le boîtier de la transmission, **caractérisée en ce que** la bague de butée (10) prévue dans le cylindre (3) est réalisée de telle sorte que les surfaces de roulement d'étanchéité du piston (2) dans le boîtier de la transmission (5) et/ou dans la plaque de raccordement (7) soient formées par un élargissement en forme de douille (10', 10") de la bague de butée (10).

2. Transmission de véhicule selon la revendication 1, **caractérisée en ce que** le cylindre (3) est réalisé sous forme de cylindre à trois positions.

3. Transmission de véhicule selon la revendication 1 ou 2, **caractérisée en ce que** le cylindre (3) est un cylindre pneumatique ou hydraulique.
